Europäisches Patentamt

European Patent Office

Office européen des brevets

(19)

(11) Veröffentlichungsnummer: **0 135 646**
**B1**

(12) **EUROPÄISCHE PATENTSCHRIFT**

(45) Veröffentlichungstag der Patentschrift:
08.03.89

(51) Int. Cl.⁴: **F 16 F 1/36,** F 16 F 7/10,
F 16 F 9/30, F 16 F 15/12

(21) Anmeldenummer: 84100603.4

(22) Anmeldetag: 20.01.84

(54) **Gummikupplung.**

(30) Priorität: 27.09.83 DE 3334881

(43) Veröffentlichungstag der Anmeldung:
03.04.85 Patentblatt 85/14

(45) Bekanntmachung des Hinweises auf die Patenterteilung:
08.03.89 Patentblatt 89/10

(84) Benannte Vertragsstaaten:
DE FR GB IT SE

(56) Entgegenhaltungen:
EP-A-0 135 648
DD-A-72 945
DE-A-2 317 855
DE-A-2 353 891
FR-A-2 090 092
GB-A-566 381
US-A-2 524 405
US-A-2 836 399
US-A-3 756 551
US-A-4 172 369

(73) Patentinhaber: **Firma Carl Freudenberg, Höhnerweg
4, D-6940 Weinheim/Bergstrasse (DE)**

(72) Erfinder: **Jörg, Benno Michael, Am Drachenstein
27, D-6940 Weinheim (DE)**
Erfinder: **Kurr, Klaus, Dr., Brunnengasse 9, D-6940
Weinheim- Hohensachsen (DE)**
Erfinder: **Seifert, Heinz, Haupstrasse 99, D-6941
Laudenbach (DE)**

(74) Vertreter: **Weissenfeld- Richters, Helga, Dr.,
Höhnerweg 2, D-6940 Weinheim/Bergstrasse (DE)**

EP 0 135 646 B1

**Beschreibung**

Die Erfindung betrifft eine Gummikupplung, bestehend aus zwei einen Spalt begrenzenden Maschinenteilen, die parallel bzw. konzentrisch drehbar zueinander und zu dem Spalt bewegbar sind sowie aus wenigstens einem in dem Spalt angeordneten Federkörper aus gummielastischem Werkstoff, der ein dem Spalt angepaßtes Profil aufweist, wobei der Federkörper an dem einen Maschinenteil festgelegt ist und mit der Haftfläche wenigstens eines einstückig angeformten Ansatzes an dem anderen Maschinenteil befestigt ist und wobei weitere einander gegenüberliegende Flächen zwischen dem Federkörper und dem anderen Maschinenteil durch nicht haftende Führungsflächen gebildet werden.

Eine solche Kupplung ist aus der FR-A-2 090 092 bekannt. Die Relativverlagerungen der beiden Maschinenteile werden dabei ausschließlich durch elastische Deformierungen des Federkörpers aufgefangen, während die zugehörigen Ansätze desselben nur beim Auftreten von Relativverlagerungen als Anschlagpuffer in Aktion treten. Im normalen Verformungsfalle ist die Führung der beiden Maschinenteile durch den Federkörper dementsprechend schlecht.

Um derartigen Schwierigkeiten zu begegnen, sind die beiden Maschinenteile bei der Gummikupplung nach der DL-PS-72 945 durch eine sekundäre Führung aufeinander abgestützt. Diese besteht aus metallischem Werkstoff. Eine ungedämpfte Übertragung von Körperschall ist hiervon die Folge. Die Herstellung der sekundären Führung ist außerdem relativ aufwendig, was unter wirtschaftlichen Gesichtspunkten nicht vertretbar ist.

Der Erfindung liegt die Aufgabe zugrunde, eine einfach herzustellende Gummikupplung zu zeigen, die eine gute Führung der relativ bewegten Maschinenteile gewährleistet und die die Übertragung von Körperschall zwischen beiden Maschinenteilen weitgehend unterbindet.

Zur Lösung dieser Aufgabenstellung wird erfindungsgemäß eine Gummikupplung der eingangs genannten Art vorgeschlagen, bei der sich der Ansatz quer und die Haftfläche parallel zur Bewegungsrichtung erstreckt, wobei das Verhältnis aus der Schub- oder Torsions- oder Biegeelastizität des Federkörpers und derjenigen des Ansatzes oder, falls mehrere Ansätze und/oder Federkörper vorhanden sind, der Summe aus der Schub- oder Torsions- oder Biegeelastizität aller Ansätze und/oder Federkörper größer ist als 0,5, gemessen jeweils in Bewegungsrichtung.

In der EP-A-135 648 (Stand der Technik nach Art. 54(3) EPÜ) ist ein Herstellungsverfahren für Ausführungsbeispiele der Erfindung erörtert.

Ansatz und Federkörper der vorgeschlagenen Gummikupplung bestehen im Regelfalle aus einem einheitlichen, homogenen Werkstoffblock. Die unterschiedliche Nachgiebigkeit des Federkörpers und des Ansatzes werden deshalb maßgeblich durch die äußere Gestalt bestimmt. Diese läßt sich gegebenenfalls durch Anwendung spanabhebender Bearbeitungsverfahren nachträglich verändern, beispielsweise zur Anpassung an bestimmte Erfordernisse des Einzelfalles. Die anzustrebenden Dimensionsverhältnisse sind im Patentanspruch 1 angegeben. Der bevorzugte Bereich des Verhältnisses aus der elastischen Nachgiebigkeit des Federkörpers und derjenigen des Ansatzes bzw. der Ansätze liegt zwischen 2 und 4.

Bei der vorgeschlagenen Gummikupplung werden die relativen Verschiebungen der beiden Maschinenteile vorwiegend durch die elastische Deformierung des Ansatzes aufgefangen, während der Federkörper an sich hiervon weitgehend unberührt ist. Er bleibt dadurch unabhängig von der Größe der relativen Verschiebungen der beiden Maschinenteile stets in seiner ursprünglichen Form erhalten, was eine gleichbleibende Zuordnung der einander zugewandten Führungsflächen gewährleistet. Krafteinleitungsbedingte Ausweichbewegungen der Maschinenteile sind weitgehend ausgeschlossen.

Die Nachgiebigkeit der Gummikupplung beruht im wesentlichen auf der Verformbarkeit des Ansatzes, d.h. auf der Nachgiebigkeit des verwendeten Werkstoffes, der Form und der Zuordnung des Ansatzes zur Bewegungsrichtung. Führungszwecke stehen nicht im Vordergrund seiner Ausbildung und der Ansatz kann dadurch vollkommen neutral gestaltet werden, beispielsweise auch im Hinblick auf die Erzielung einer besonders großen Nachgiebigkeit, die in vielen Anwendungsfällen sehr erwünscht ist. Die Querschnittsbelastung des Ansatzes unter Betriebsbedingungen soll möglichst gleichmäßig sein. Diesem Ziel wird eine Ausführung besonders gerecht, bei der sich die Haftfläche parallel und der Ansatz quer zur Bewegungsrichtung erstreckt bzw. die Haftfläche quer und der Ansatz parallel zur Bewegungsrichtung. Im letztgenannten Falle resultiert eine hohe Werkstoffbelastung bei verminderter Beweglichkeit. Die Form wird daher nicht bevorzugt. Darüberhinaus ergibt sich bereits aus der Festlegung des relativ beweglichen Maschinenteils an der Haftfläche des Ansatzes eine Beeinträchtigung der Relativbeweglichkeit und damit ein weiteres Führungsmoment, das durch sich parallel zur Bewegungsrichtung erstreckende Begrenzungsflächen noch verstärkt werden kann.

Die einander zugewandten Führungsflächen der vorgeschlagenen Gummikupplung können aneinander anliegen, was einen besonders guten Führungseffekt bedingt, zugleich aber die anfängliche Überwindung der Haftreibung bei Einleitung einer relativen Verlagerung der angeschlossenen Maschinenteile erfordert. Der Vorgang kann sich in bestimmten Anwendungen nachteilig auswirken, und es hat sich für diese Fälle als zweckmäßig erwiesen, den einander zugeordneten Führungsflächen einen Abstand voneinander zu geben. Die Dimensionierung des Abstandes ergibt sich dabei aus der notwendigen Führungspräzision in Bewegungsrichtung. Sie läßt in den meisten Fällen die Bildung eines Zwischenraumes von wenigen Zehntel Millimeter Breite ohne weiteres zu.

Der Zwischenraum kann zur Verminderung des Reibungswiderstandes bei einer gegenseitigen Berührung der Führungsflächen mit einem schmierend wirkenden Stoff gefüllt werden. Auch die Einbringung einer viskosen Flüssigkeit ist möglich. Sie bedingt eine gute Dämpfung der relativen Beweglichkeit der angeschlossenen Maschinenteile, was beispielsweise in bezug auf eine Verwendung der vorgeschlagenen Gummikupplung in einem Schwingungsdämpfer von großem Vorteil ist.

Unter Verwendung eines näherungsweise dämpfungsfreien elastomeren Werkstoffes für den Federkörper kann entsprechend dem besonderen Anwendungsfall durch die Wahl einer Flüssigkeit mit niedriger Viskosität mehr eine Tilgereigenschaft oder durch die Wahl einer Flüssigkeit mit hoher Viskosität mehr eine Dämpfereigenschaft eingestellt werden.

Als schmierend wirkender Stoff oder viskose Flüssigkeit können auch kapillaraktive Medien zur Anwendung kommen, was es in den meisten Fällen erübrigt, den spaltenartig ausgebildeten Zwischenraum allseitig zu schließen. Kapillaraktive Medien werden dann von den in einem so engen Zwischenraum vorhandenen Kapillarkräften mit ausreichender Sicherheit gehalten, so daß ihr Verbleiben in dem Zwischenraum sogar unabhängig von der Lage der Gummikupplung stets gesichert ist.

Der Zwischenraum zwischen den Führungsflächen kann bei der vorgeschlagenen Gummikupplung auch allseits geschlossen werden, beispielsweise durch Anbringung von Ansätzen auf einander gegenüberliegenden Seiten des Federkörpers. In diesen Fällen ist eine Druckbeaufschlagung möglich, was es erlaubt, die Tiefe des Zwischenraumes nachträglich zu verändern. Beispielsweise in bezug auf die Einstellung der Dämpfungswirkung eines Schwingungsdämpfers ist diese Möglichkeit von erheblicher Bedeutung. Sie kann gegebenenfalls unter Betriebsbedingungen erfolgen und an die momentan gegebene Betriebssituation angepaßt sein.

Die Ansätze an sich können jede beliebige Gestalt haben. Bevorzugt wird jedoch eine Ausführung, bei der die Ansätze durch leistenähnlich ausgebildete Vorsprünge gebildet werden, die sich parallel zur Bewegungsrichtung erstrecken. Bei einer relativ einfach herzustellenden Gestalt lassen sich hierdurch relativ große Kräfte in Bewegungsrichtung über die Ansätze übertragen.

Die Führungsflächen können mit sich parallel zur Bewegungsrichtung erstreckenden, ineinandergreifenden Führungsleisten versehen sein. Unerwünschte Querbewegungen der angeschlossenen Maschinenteile können hierdurch wirksam verhindert werden. Zugleich ergibt sich, verglichen mit einer ebenen Ausführung, eine relative Vergrößerung der Oberfläche, was beispielsweise bei Verwendung eines viskosen Mediums im Zwischenraum zwischen den Führungsflächen zu verbesserten Dämpfungseigenschaften führt.

Die vorgeschlagene Gummikupplung kann je nach Richtung der eingeleiteten Relativbewegungen nahezu jede beliebige Gestalt haben. Eine ebene Ausführung erlaubt ihre Verwendung rotationssymmetrische Ausführung ihre Verwendung in einem Drehschwingungsdämpfer, beispielsweise in einem solchen, in dem das angeschlossene Maschinenteil mit einer seismischen Masse verbunden ist.

Der Gegenstand der voliegenden Erfindung wird nachfolgend anhand der in der Anlage beigefügten Zeichnungen weiter erläutert. Es zeigen:

Figur 1 eine Gummikupplung in halbgeschnittener Darstellung.

Figur 2 die Verwendung der vorgeschlagenen Gummikupplung in einem Längsschwingungsdämpfer in rotationssymmetrischer Ausführung.

Figur 3 die Verwendung der vorgeschlagenen Gummikupplung in einem Drehschwingungstilger.

Figur 4 die Verwendung der vorgeschlagenen Gummikupplung als Verbindungsglied zwischen einer Nabe und einer Riemenscheibe.

Figur 5 die Verwendung der vorgeschlagenen Gummikupplung in einem Drehschwingungsdämpfer.

Figur 6 die Verwendung der vorgeschlagenen Gummikupplung in einem Längsschwingungsdämpfer.

Figur 7 die Verwendung der vorgeschlagenen Gummikupplung in einem Drehschwingungsdämpfer.

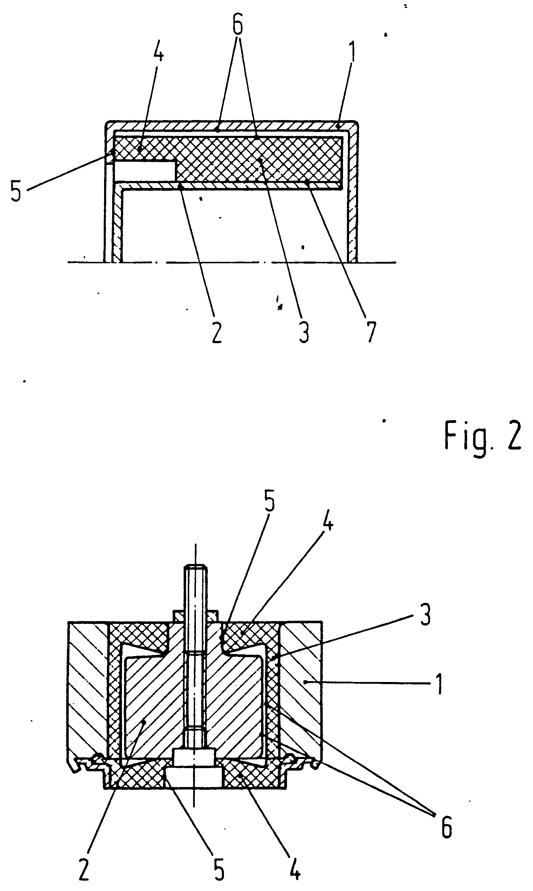

Die in Figur 1 in halbgeschnittener Darstellung gezeigte Gummikupplung hat eine rotationssymmetrische Gestalt. Sie besteht aus zwei tassenförmig ausgebildeten Maschinenteilen 1, 2 aus Stahlblech, die ineinanderliegend angeordnet sind.

Zwischen den beiden Maschinenteilen 1 und 2 ist der Federkörper 3 angeordnet mit dem einstückig aus seinem Werkstoffkörper herausgeformten, sich in axialer Richtung erstreckenden Ansatz 4. Der Ansatz 4 ist im Bereich seiner stirnseitigen Haftfläche 5 mit dem äußeren Maschinenteil 1 durch Vulkanisation verbunden. Die übrigen einander gegenüberliegenden Flächen des äußeren Maschinenteiles 1, des Federkörpers 3 und des Ansatzes 4 sind als Führungsflächen ausgebildet und liegen ohne gegenseitige Verbindung beweglich aneinander an.

Die Drehsteifigkeit des Federkörpers 3 ist größer als diejenige des Ansatzes 4. Die aus einer relativen Verdrehung der Maschinenteile 1 und 2 resultierenden Verformungen wirken sich dadurch primär auf den Ansatz 4 aus. Sie lassen den Federkörper 3 weitgehend unberührt, wodurch auch bei Einleitung einer relativen Verdrehung eine gute radiale Abstützung zwischen den beiden Maschinenteilen 1 und 2 gewährleistet ist. Der Federkörper 3 ist im Bereich der Fläche 7 durchgehend an das innere Maschinenteil 2 anvulkanisiert.

Figur 2 verdeutlicht die Verwendung der vorgeschlagenen Gummikupplung in einem Längsschwingungsdämpfer. Dieser hat eine rotationssymmetrische Gestalt und besteht aus dem äußeren Maschinenteil 1, das den inneren Maschinenteil 2 in radialer Richtung umschließt.

Zwischen beiden Maschinenteilen ist der Federkörper 3 angeordnet, der durchgehend an die Innenwandung des äußeren Maschinenteiles anvulkanisiert ist. Er weist zwei kreisringförmig nach innen vorspringende Ansätze 4 auf, die mit ihrer Stirnfläche 5 an dem inneren Maschinenteil 2 festgelegt sind. Zwischen den einander zugewandten Führungsflächen 6 ist ein Spalt von geringer Breite vorhanden, der eine gute Relativbeweglichkeit der beiden Maschinenteile 1 und 2 gewährleistet und zugleich eine ausreichend präzise Führung.

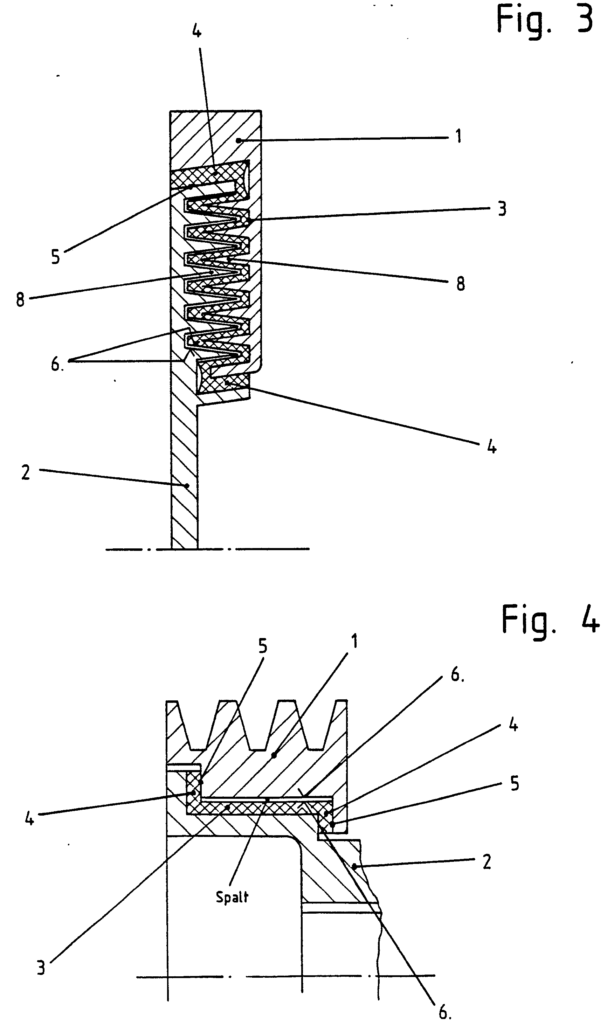

Die Ausführung nach Figur 3 zeigt eine Verwendung der vorgeschlagenen Gummikupplung in einem für hohe Drehzahlen vorgesehenen Drehschwingungstilger. Dieser besteht aus dem äußeren Maschinenteil 1, das durch eine seismische Masse gebildet wird, und aus dem inneren Maschinenteil 2, das durch einen Trägerflansch gebildet wird. Das äußere und das innere Maschinenteil sind mit ringförmigen Führungsleisten 8 versehen, die ein dreieckiges Profil haben, und die ineinandergreifen. Das äußere Maschinenteil umschließt zugleich die Gesamtheit der in axialer Richtung vorspringenden Führungsleisten des inneren Maschinenteiles mit dem U-förmigen Profil der Tilgermasse. Diese ist auf der Innenseite des Profils mit einer durchgehend anvulkanisierten Schicht aus Gummi versehen, die den Federkörper 3 bildet. Die Schicht hat von den Führungsleisten 8 des Innenringes einen geringen Abstand, wodurch beiderseits in Umfangsrichtung leicht relativ zueinander bewegliche Führungsflächen gebildet werden. Sie ist im Bereich der äußeren Begrenzung des Profils beiderseits in Richtung des Innenringes verdickt und unter Bildung der Ansätze 4 über die Haftfläche 5 an diesem festgelegt. Der Zwischenraum zwischen den Führungsflächen 6 enthält ein Schmiermittel zur Verminderung der Reibung bei gegenseitiger Berührung.

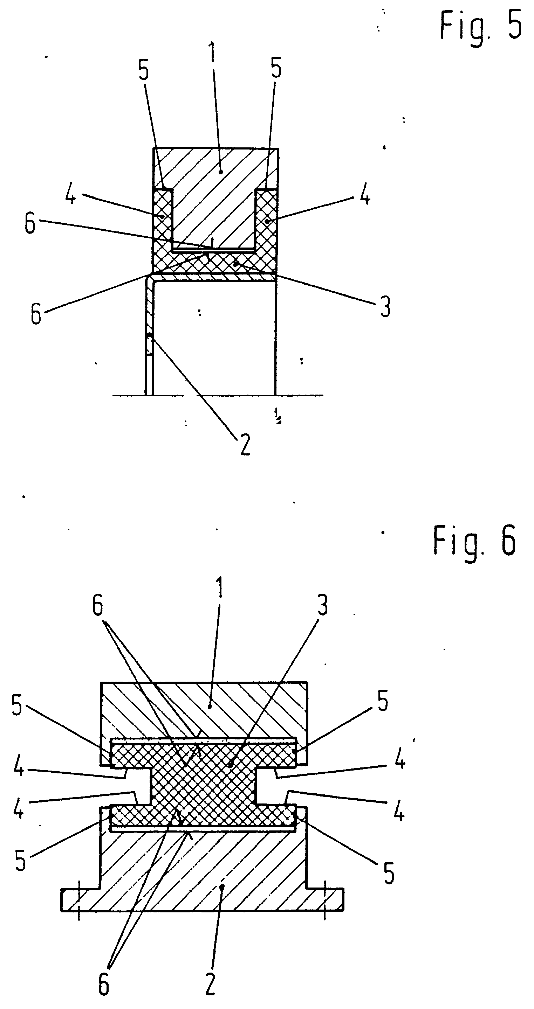

Die in Figur 4 in halbgeschnittener Darstellung gezeigte Gummikupplung hat ebenfalls eine rotationssymmetrische Gestalt. Sie ist zwischen zwei sich in radialer Richtung umschließenden Maschinenteilen 1 und 2 angeordnet. Das Äußere der beiden Maschinenteile wird durch eine Riemenscheibe gebildet, das Innere durch die zugehörige Nabe.

An das innere Maschinenteil ist der Federkörper 3 als durchgehende Beschichtung anvulkanisiert. Die Beschichtung hat einen geringen radialen Abstand von der Innenseite des äußeren Maschinenteiles 1.

Die Dicke der Beschichtung ist auf den einander gegenüberliegenden Seiten unter Bildung der Ansätze 4 verdickt. Diese sind im Bereich der Haftflächen 5 mit dem äußeren Maschinenteil verbunden. Die übrigen einander gegenüberliegenden Flächen des äußeren Maschinenteiles 1, des rechten Ansatzes 4 und des Federkörpers 3 sind als Führungsflächen 6 ausgebildet und dienen der Gewährleistung einer gleichbleibenden radialen Zuordnung des äußeren Maschinenteiles 1 zu dem inneren Maschinenteil 2.

Figur 5 zeigt die Verwendung der vorgeschlagenen Gummikupplung in einem Drehschwingungsdämpfer in halbgeschnittener Darstellung. Das äußere Maschinenteil 1 umschließt das innere Maschinenteil 2 in radialer Richtung. An Letzteres ist der Federkörper 3 anvulkanisiert. Er weist auf einander gegenüberliegenden Seiten flanschartig nach außen vorspringende Ansätze 4 auf, die mit ihren Flächen 5 an das äußere Maschinenteil 1 anvulkanisiert sind. Die Ausführung gewährleistet zusätzlich zu der guten radialen Führung des äußeren Maschinenteiles über die Führungsflächen 6 eine gewisse axiale Führung. Die Verdrehbeweglichkeit der beiden Teile wird hierdurch nicht nennenswert gestört. Dennoch ergibt sich bei vereinfachter Herstellbarkeit die Möglichkeit einer weitgehend lageunabhängigen Verwendung.

Figur 6 nimmt Bezug auf eine Verwendung der vorgeschlagenen Gummikupplung in einem Schwingungsdämpfer für geradlinige Bewegungen. Die beiden Maschinenteile 1 und 2 weisen dabei gegeneinander geöffnete Nuten auf, in denen der Federkörper 3 mit den Ansätzen 4 gelagert ist.

Die Ansätze 4 sind einstückig aus dem Werkstoff des Federkörpers 3 herausgeformt. Sie sind mit den Maschinenteilen 1, 2 lediglich durch die Haftflächen 5 der Ansätze 4 verbunden. Die übrigen einander gegenüberliegenden Flächen des Federkörpers 3, der Ansätze 4 und der beiden Maschinenteile 1, 2 werden durch Führungsflächen 6 gebildet. Diese haben einen Abstand voneinander, und der so gebildete Zwischenraum ist mit einer Dämpfungsflüssigkeit gefüllt.

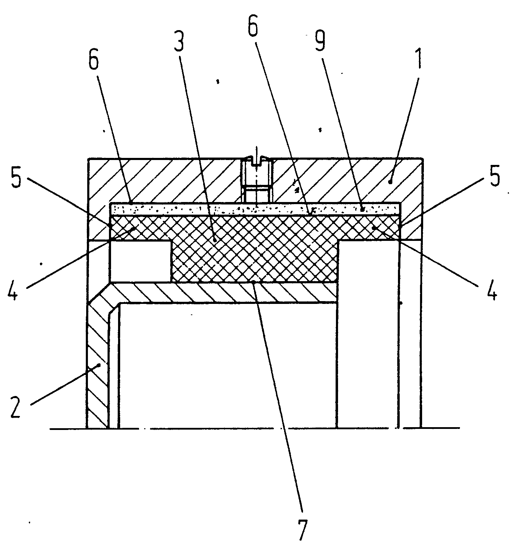

Figur 7 zeigt die Verwendung der vorgeschlagenen Gummikupplung in einem Drehschwingungsdämpfer in halbgeschnittener Darstellung. Das äußere Maschinenteil 1 umschließt das innere Maschinenteil 2 in radialer Richtung. An letzteres ist der Federkörper 3 anvulkanisiert. Er weist auf einander gegenüberliegenden Seiten axial nach außen vorspringende Ansätze 4 auf, die mit ihren Haftflächen 5 an das äußere Maschinenteil 1 anvulkanisiert sind. Die Ausführung gewährleistet zusätzlich zu der guten radialen Führung des äußeren Maschinenteiles über die Führungsflächen 6 eine gewisse axiale Führung. Die Verdrehbeweglichkeit der beiden Teile wird hierdurch nicht nennenswert gestört. Dennoch ergibt sich bei vereinfachter Herstellbarkeit die Möglichkeit einer weitgehend lageunabhängigen Verwendung. Der Zwischenraum 9 zwischen den Führungsflächen 6 ist mit einer Dämpfungsflüssigkeit gefüllt.

**Patentansprüche**

1. Gummikupplung, bestehend aus zwei einen Spalt begrenzenden Maschinenteilen (1, 2), die parallel bzw. konzentrisch drehbar zueinander und zu dem Spalt bewegbar sind sowie aus wenigstens einem in dem Spalt angeordneten Federkörper (3) aus gummielastischem Werkstoff der ein dem Spalt angepaßtes Profil aufweist, wobei der Federkörper an dem einen Maschinenteil festgelegt ist und mit der Haftfläche wenigstens eines einstückig angeformten Ansatzes (4) an dem anderen Maschinenteil befestigt ist und wobei weitere, einander gegenüberliegende Flächen zwischen dem Federkörper (3) und einem Maschinenteil durch nicht haftende Führungsflächen (6) gebildet werden, dadurch gekennzeichnet, daß sich der Ansatz (4) quer und die Haftfläche (5) parallel zur Bewegungsrichtung erstreckt und daß das Verhältnis aus der Schub- oder Torsions- oder Biegeelastizität des Federkörpers und derjenigen des Ansatzes, oder, falls mehrere Ansätze und/oder Federkörper vorhanden sind, der Summe aus der Schub- oder Torsions- oder Biegeelastizität aller Ansätze und/oder Federkörper, größer ist als 0,5, gemessen jeweils in Bewegungsrichtung.

2. Gummikupplung nach Anspruch 1, dadurch gekennzeichnet, daß die Führungsflächen (6) einen Abstand haben.

3. Gummikupplung nach Anspruch 2, dadurch gekennzeichnet, daß der durch den Abstand gebildete Zwischenraum mit einem schmierend wirkenden Stoff gefüllt ist.

4. Gummikupplung nach Anspruch 2, dadurch gekennzeichnet, daß der durch den Abstand gebildete Zwischenraum mit einer viskosen Flüssigkeit gefüllt ist.

5. Gummikupplung nach Anspruch 3 oder 4, dadurch gekennzeichnet, daß der Zwischenraum geschlossen und druckbeaufschlagbar ist.

6. Gummikupplung nach Anspruch 1 bis 5, dadurch gekennzeichnet, daß das Verhältnis 2 bis 4 beträgt.

7. Gummikupplung nach Anspruch 1 bis 6, dadurch gekennzeichnet, daß die Ansätze (4) durch leistenähnlich ausgebildete Vorsprünge gebildet werden, die sich parallel zur Bewegungsrichtung erstrecken.

8. Gummikupplung nach Anspruch 1 bis 7, dadurch gekennzeichnet, daß die Führungsfächen (6) mit sich parallel zur Bewegungsrichtung erstreckenden, ineinandergreifenden Führungsleisten (8) versehen sind.

9. Gummikupplung nach Anspruch 1 bis 8, dadurch gekennzeichnet, daß der Federkörper (3) und die angrenzenden Maschinenteile (1, 2) rotationssymmetrisch ausgebiildet sind.

10. Gummikupplung nach Anspruch 1 bis 9, dadurch gekennzeichnet, daß eines der beiden Maschinenteile (1, 2) mit einer seismischen Masse verbunden sind.

**Claims**

1. A rubber coupling, composed of two machine parts (1, 2) bounding a gap, the parts being rotatable parallel or concentrically to one another and being movable with respect to the gap, as well as of at least one spring body (3) of elastomeric material, which is arranged in the gap and has a profile fitting the gap, the spring body being fixed on one of the machine parts and being fastened to the other machine part by the adhesive surface of at least one integrally moulded-on extension (4), and further, mutually opposed surfaces being formed between the spring body (3) and one machine part by non-adhesive guiding surfaces (6), characterized in that the extension (4) extends transversely to the direction of movement and the adhesive surface (5) extends parallel to the direction of movement, and in that the ratio of the shearing or torsional or bending elasticity of the spring body and that of the extension or, if more than one extension and/or spring body is present, the sum of the shearing or torsional or bending elasticity of all extensions and/or spring bodies is greater than 0,5, measured in each case in the direction of movement.

2. A rubber coupling according to claim 1, characterised in that the guiding surfaces (6) are spaced apart.

3. A rubber coupling according to claim 2, characterised in that the intermediate space formed by the spacing apart is filled with a substance having a lubricating action.

4. A rubber coupling according to claim 2, characterised in that the intermediate space formed by the spacing apart is filled with a viscous liquid.

5. A rubber coupling according to claim 3 or 4, characterised in that the intermediate space is closed and capable of being pressurised.

6. A rubber coupling according to any of claims 1 to 5, characterized in that the ratio ranges from 2 to 4.

7. A rubber coupling according to any of claims 1 to 6, characterized in that the extensions (4) are formed by projections designed like strips, which extend parallel to the direction of movement.

8. A rubber coupling according to any of claims 1 to 7, characterised in that the guiding surfaces (6) are provided with interlocking guide strips (8), extending parallel to the direction of movement.

9. A rubber coupling according to any of claims 1 to 8, characterised in that the spring body (3) and the bounding machine parts (1, 2) are designed to be rotationally symmetrical.

10. A rubber coupling according to any of claims 1 to 9, characterised in that one of the two machine parts (1, 2) is connected to a seismic mass.

## Revendications

1. Accouplement en caoutchouc constitué de deux pièces mécaniques (1, 2) limitant un intervalle, qui peuvent se déplacer parallèlement l'une à l'autre ou qui peuvent tourner concentriquement l'une par rapport à l'autre et qui peuvent se déplacer par rapport à l'intervalle ainsi que d'au moins un corps élastique (3) disposé dans l'intervalle et en matériau élastique à base de caoutchouc qui présente un profil adapté à l'intervalle, tandis que le corps élastique est fixé à une pièce mécanique et est fixé à l'autre pièce mécanique par la surface d'adhérence d'au moins une embase (4) réalisée d'une pièce, tandis que les autres surfaces opposées l'une à l'autre entre le corps élastique (3) et une pièce mécanique sont constituées par des surfaces de guidage (6) non adhérentes, caractérisé en ce que l'embase (4) s'étend transversalement à la direction de déplacement et la surface d'adhérence (5) parallèlement à cette direction et en ce que le rapport de l'élasticité de cisaillement ou de torsion ou de flexion du corps élastique à celle de l'embase ou, au cas où il existe plusieurs embases et/ou corps élastiques, la somme des élasticités de cisaillement, de torsion ou de flexion de toutes les embases et/ou corps élastiques est plus grande que 0,5, mesuré chaque fois dans la direction de déplacement

2. Accouplement en caoutchouc selon la revendication 1, caractérisé en ce que les surfaces de guidage (6) sont à une certaine distance l'une de l'autre.

3. Accouplement en caoutchouc selon la revendication 2, caractérisé en ce que l'interstice constitué par la distance entre ces surfaces est rempli par une substance lubrifiante.

4. Accouplement en caoutchouc selon la revendication 2, caractérisé en ce que l'interstice constitué par la distance précitée est rempli par un liquide visqueux.

5. Accouplement en caoutchouc selon la revendication 3 ou 4, caractérisé en ce que l'interstice est fermé et peut être soumis à pression.

6. Accouplement en caoutchouc selon les revendications 4 ou 5, caractérisé en ce que le rapport est compris entre 2 et 4.

7. Accouplement en caoutchouc selon les revendications 1 à 6, caractérisé en ce que les embases (4) sont constituées par des saillies en forme de barres, qui s'étendent parallèlement à la direction du mouvement.

8. Accouplement en caoutchouc selon les revendication 1 à 7, caractérisé en ce que les surfaces de guidage (6) sont pourvues de barres de guidage (8) se chevauchant l'une l'autre et s'étendant parallèlement à la direction du mouvement.

9. Accouplement en caoutchouc selon les revendications 1 à 8, caractérisé en ce que le corps élastique (3) et les pièces mécaniques avoisinantes (1, 2) présentent une forme à symérie de rotation.

10. Accouplement en caoutchouc selon les revendications 1 à 9, caractérisé en ce que l'une des deux pièces mécaniques (1, 2) est reliée à une masse sismique.

Fig. 2

Fig. 3

4

1

3

5

8

8

6.

4

2

Fig. 4

5

1

6.

4

5

4

2

Spalt

3

6.

Fig. 5

Fig. 6